# EUROPÄISCHE PATENTSCHRIFT

(11) **EP 1 212 554 B1**
(45) Veröffentlichungstag und Bekanntmachung des Hinweises auf die Patenterteilung: **02.07.2003**
(21) Anmeldenummer: 00967651.1
(22) Anmeldetag: 07.09.2000
(51) Int. Cl.: F16H 57/02, F16H 1/14, B60K 17/30

(54) **GETRIEBEBAUEINHEIT**
TRANSMISSION UNIT
BOITE DE VITESSES

(30) Priorität: 14.09.1999 DE 29916006 U; 29.08.2000 DE 10042475
(43) Veröffentlichungstag der Anmeldung: 12.06.2002
(73) Patentinhaber: Voith Turbo GmbH & Co. KG, 89522 Heidenheim (DE)
(72) Erfinder: KÖRNER, Tillmann, 89551 Zang (DE); EUBLER, Hans-Peter, 89522 Heidenheim (DE)
(74) Vertreter: Koch, Annegret Christa
(86) Internationale Anmeldenummer: EP0008754
(87) Internationale Veröffentlichungsnummer: WO01020195

(56) Entgegenhaltungen:
- EP-A- 0 118 098
- GB-A- 2 000 734
- US-A- 4 553 624

## Beschreibung

Die Erfindung betrifft eine Getriebebaueinheit, im einzelnen mit den Merkmalen aus dem Oberbegriff des Anspruchs 1.

Getriebebaueinheiten sind in einer Vielzahl von unterschiedlichsten Ausführungen bekannt. Diese können unter anderem hinsichtlich der gewählten Art der realisierten Drehzahl-/Drehmomentenwandlung unterschieden werden. Die Drehzahl-/Drehmomentenwandlung kann dabei beispielsweise rein mechanisch oder kombiniert mit anderen Wandlungsmöglichkeiten erfolgen. Da zunehmend das Erfordernis der Universalität der Getriebebaueinheit hinsichtlich der Einbaugegebenheiten in Fahrzeugen im Vordergrund steht, werden zur Realisierung von Abtrieben mit unterschiedlichem Winkel zur Getriebeeingangswelle bei derartigen Getriebebaueinheiten Winkeltriebe verwendet. Ein wesentliches Problem besteht dabei darin, daß die derart durch Kombination gebildeten Getriebebaueinheiten aufgrund der zu realisierenden Montage der einzelnen Elemente des Winkeltriebes, insbesondere des mit dem Abtrieb der Grundgetriebebaueinheit gekoppelten Elementes eine relativ große Baulänge aufweisen, was wiederum zu Schwierigkeiten bei der Integration in Fahrzeugen führen kann, da der für die Getriebebaueinheit vorgesehene Bauraum in der Regel sehr begrenzt ist.

Der Erfindung liegt daher die Aufgabe zugrunde, eine Getriebebaueinheit für den Einsatz in Fahrzeugen mit mechanischer oder kombinierter Leistungsübertragung derart weiter zu entwickeln, daß diese bei geringem konstruktiven Aufwand einen geringen Bauraumbedarf aufweist.

Die erfindungsgemäße Lösung ist durch die Merkmale des Anspruchs 1 charakterisiert Vorteilhafte Ausgestaltungen sind in den Unteransprüchen wiedergegeben.

Die Getriebebaueinheit umfaßt eine Getriebeeingangswelle und eine Getriebeausgangswelle, zwischen welchen ein mechanischer Getriebeteil angeordnet ist. Der mechanische Getriebeteil umfaßt eine Grundgetriebebaueinheit, welche auch als sogenanntes Rumpfgetriebe bezeichnet wird, und einen Winkeltrieb in Form einer Kegelradsstufe, umfassend ein erstes Kegelrad und ein zweites Kegelrad, wobei das zweite Kegelrad wenigstens mittelbar drehfest mit der Getriebeausgangswelle koppelbar ist, während erfindungsgemäß das erste Kegelrad in unmittelbarer räumlicher Nähe zum Abtrieb der Grundgetriebebaueinheit angeordnet ist und mit diesem unmittelbar drehfest verbunden ist, d.h. frei von einer extra zur Anbindung vorgesehenen separaten Verbindungswelle zwischen dem Abtrieb der Grundgetriebebaueinheit und dem ersten Kegelrad. Das erste Kegelrad des Winkeltriebes wird dann also nicht auf einer Verlängerung der Welle angeordnet bzw. ist mit einer Welle drehfest verbunden, welche das als Abtrieb fungierende Getriebeelement trägt bzw. mit diesem verbunden ist An der Anordnung der Wellen im Grundgetriebe ändert sich somit nichts Das Getriebegehäuse umfaßt wenigstens ein, die Grundgetriebebaueinheit umschließendes Getriebegrundgehäüse, welches mit einem Gehäusedeckel in Form eines, den Winkeltrieb wenigstens teilweise umschließenden Getriebegehäuseteiles verbindbar ist. Dabei ist erfindungsgemäß die Grundgetriebebaueinheit des weiteren frei von Elementen zur Erzeugung einer sich am Gehäusedeckel an der Gehäusewand abstützenden Axialkraft, beispeislweise einem in axialer Richtung wirkbaren Kolben.

In einer besonders bevorzugten Ausführungsform umfaßt die Grundgetriebebaueinheit wenigstens einen Stimradsatz mit zwei miteinandner kämmenden Stimrädem oder einen Planetenradsatz, umfassend wenigstens ein Sonnenrad, ein Hohlrad, Planetenräder und einen Steg, wobei ein Element dieser Übertragungselemente den Abtrieb der Grundgetriebebaueinheit bildet Der Abtrieb wird dann beim Planetenradsatz beispielsweise vom Hohlrad, Steg oder dem Sonnenrad des Planetenradsatzes oder bei Simradsatz dem mit dem Ritzel kämmenden Stirnrad gebildet. Der Eingang des Winkeltriebes wird dabei direkt vom ersten Kegelrad gebildet Zur Realisierung der drehfesten Verbindung zwischen dem, den Abtrieb bildenden Getriebeelement der Grundgetriebebaueinheit und dem ersten Kegelrad bestehen im wesentlichen die folgenden Möglichkeiten:
a) Formschluß
b) Kraftschluß
c) Kombination aus Form- und Kraftschluß

Erfindungsgemäß erfolgt die Verbindung durch Form- und Kraftschluß aufgrund zueinander komplementär ausgeführter Mitnahmeelemente an dem, den Abtrieb der Grundgetriebebaueinheit bildenden Getriebeelement und dem ersten Kegelrad, welche miteinander in Wirkverbindung bringbar sind. Diese sind vorzugsweise in Umfangsrichtung betrachtet in gleichmäßigen Abständen zueinander am Getriebeelement und erstem Kegelrad ausgeführt. Die Mitnahmeelemente können dabei beispielsweise als Klauen, die in dafür vorgesehene Ausnehmungen eingreifen oder entsprechend ausgebildete Verzahnungen ausgeführt werden. Dabei können im wesentlichen zwei Grundkonstellationen unterschieden werden:
1. Ausbildung und Ausrichtung von Mitnahmeelementen am ersten Kegelrad und/oder dem den Abtrieb der Grundgetriebebaueinheit bildenden Getriebeelement und entsprechend dafür vorgesehenen komplementären Mitnahmelementen, beispielsweise in Form von Mitnahmeausnehmungen am, den Abtrieb der Grundgetriebebaueinheit bildenden Getriebeelement und/oder ersten Kegelrad in axialer Richtung bezogen auf den Verlauf der Getriebeachse, insbesondere der Getriebeeingangswelle in Einbaulage betrachtet
2. Ausbildung und Ausrichtung von Mitnahmeelementen am ersten Kegelrad und/oder dem den Abtrieb der Grundgetriebebaueinheit bildenden Getriebeelement und entsprechend dafür vorgesehenen komplementären Mitnahmelementen, beispielsweise in Form von Mitnahmeausnehmungen am, den Abtrieb der Grundgetriebebaueinheit bildenden Getriebeelement und/oder ersten Kegelrad in radialer Richtung bezogen auf den Verlauf der Getriebeachse, insbesondere der Getriebeeingangswelle in Einbaulage betrachtet

Die Mitnahmeelemente und die dafür vorgesehenen Ausnehmungen bzw. komplemetären Mitnahmeelemente, welche auch als Ausnehmungen ausgeführt sein können, sind dabei vorzugsweise im Bereich des Außenumfanges von erstem Kegelrad und/oder dem Abtrieb der Grundgetriebebaueinheit bildenden Getriebeelement angeordnet Die Ausbildung der Mitnahmelemente erfolgt dabei:
1. an einem Innenumfang des den Abtrieb bildenden Getriebeelementes und der dazu komplementären Mitnahmeelmente am ersten Kegelrad an einem Außenumfang des ersten Kegelrades oder
2. an einem Außenumfang des den Abtrieb der Grundgetriebebaueinheit bildenden Getriebeelementes und der dazu komplementären Mitnahmeelemente an einem Innenumfang, welcher am ersten Kegelrad ausgebildet ist.

Diese beiden dargestellten Möglichkeiten bieten den Vorteil, daß die Realisierung der drehfesten Verbindung zwischen dem Winkeltrieb und dem Abtrieb der Grundgetriebebaueinheit ohne weitere zusätzliche Befestigungsmaßnahmen möglich ist, sondern allein durch Aufstecken realisiert wird, wobei die Sicherung in axialer Richtung allein durch die Kopplung der Gehäuse von Winkeltrieb, in welchem das erste Kegelrad gelagert ist, und Grundgetriebebaueinheit möglich wird. Diese Art der Anbindung des Winkeltriebes an die Grundgetriebebaueinheit zeichnet sich durch einen sehr geringen Bauraumbedarf aus, was sich auf die Gesamtlänge der Getriebebaueinheit besonders positiv auswirkt.

Unter einem weiteren Aspekt der Erfindung können der Winkeltrieb, der diesen umschließende Gehäuseteil sowie die erforderlichen Lagerungen als komplett vormontierte Baueinheit mit einer Grundgetriebebaueinheit zu einer Getriebebaueinheit zusammengefaßt werden. Die Möglichkeit der Abnahme des Winkeitriebes von der Grundgetriebebaueinheit als modulare Einheit bietet den Vorteil, daß die Grundgetriebebaueinheit auch ohne vorhandenen Winkeltrieb für sich allein geprüft werden kann. Voraussetzung dafür ist jedoch, daß es sich bei der Grundgetriebebaueinheit um eine Ausführung handelt, deren Betätigungselemente für die einzelnen Getriebeelemente zur Realisierung der Gangstufen keine Axialkräfte auf einen möglichen Abschluß- bzw. Gehäusedeckel für die Grundgetriebebaueinheit aufbringen, sondern diese Axialkräfte im Gehäuse durch entsprechende Gestaltung dessen bereits abgebaut werden. Das heißt, die Getriebebaueinheit ist frei von Elementen zur Erzeugung einer Axialkraft direkt auf den Getriebegehäusedeckel im Bereich des Abtriebes der Grundgetriebebaueinheit und des Winkeltriebes.

Eine besonders bevorzugte Ausführung besteht in der Realisierung der drehfesten Kopplung des ersten Kegelrades mit dem, den Abtrieb der Grundgetriebebaueinheit bildenden Hohlrades eines mechanischen Getriebeteiles. Bei dieser Ausführung kann mit besonders großen Durchmessem im ersten Kegelrad operiert werden. Dies führt aufgrund der daraus resultierenden Gestaltung des mit dem ersten Kegelrad kämmenden zweiten Kegelrades zu einer besonders kurzen und kompakten Bauweise. Der Ein- und Ausbau des zweiten, mit der Abtriebswelle gekoppelten Kegelrades erfolgt vorzugsweise über die Ebene der Anflanschung des gesamten Winkeltriebes. Die Lagerung der Winkeltriebelemente ist unabhängig von der Einheitslagerung des Abtriebes, d.h. der Getriebeausgangswelle, weshalb auf das Nachstellen der Lager bei der Winkeltriebanflanschung verzichtet werden kann.

Die Verbindung zwischen dem Grundgehäuse der Grundgetriebebaueinheit und dem Gehäuseteil des Winkeltriebes zur Bildung des Gesamtgetriebegehäuses erfolgt in der Regel ebenfalls durch Kraft- und/oder Formschluß. Der Gehäuseteil für den Winkeltrieb kann dabei einteilig oder vorzugsweise mehrteilig ausgeführt sein.

Unter einem weiteren Aspekt der Erfindung kann einer Baureihe von Winkeltrieben in Form einer Kegelradstufe, umfassend ein erstes Kegelrad und ein zweites Kegelrad, wobei die Übersetzung für alle theoretisch möglichen Winkel zwischen Eingang des Winkeltriebes und Ausgang des Winkeltriebes konstant ist sowie die Außendurchmesser der einzelnen Kegelräder, erstes Kegelrad und zweites Kegelrad im wesentlichen ebenfalls konstant gehalten werden, ein Einheitsgehäuse mit identischen Außenabmessungen zugeordnet werden. Die, bedingt durch die unterschiedlichen Abtriebswinkel erforderliche Anpassung der Lage der Abtriebswelle und damit der Anordnung der Lagerung, wird vorzugsweise durch in das Gehäuse integrierbare und austauschbare Lagerhaltevorrichtungen realisiert. Unter den genannten Voraussetzungen, d.h. für eine Getriebebaureihe mit Winkeltrieben unterschiedlicher Abtriebswinkel, wobei die Übersetzung für alle theoretisch möglichen Winkel im wesentlichen konstant ist und die Durchmesser der einzelnen Elemente des Winkeltriebes im wesentlichen ebenfalls innerhalb der Baureihe konstant bleiben, überstreichen die Schnittpunkte der Flankenlinien mit der Getriebesymmetrieachse S_{G} für unterschiedliche Winkel einen bestimmten Bereich in axialer Richtung auf der Getriebesymmetrieachse S_{G} betrachtet. Entsprechend dieses Bereiches erfolgt die Auslegung des Getriebegehäuseteils. Um möglichst ein einheitliches Gesamtgetriebegehäuse, eingeschlossen den Getriebegehäuseteil für den Winkeltrieb, zu erhalten, d.h. eine Grundgetriebebaueinheit an unterschiedliche Abtriebsgegebenheiten anzupassen, unter Beibehaltung eines Getriebegehäuses, wird der den Winkeltrieb umschließende Getriebegehäuseteil derart standardisiert ausgeführt, daß dieser zur Aufnahme aller theoretisch möglicher bzw. gewünschter Winkeltriebe geeignet ist. Dabei werden vorher die Grenzfälle festgelegt. Im allgemeinen wird jedoch das Grundgehäuse des Getriebegehäuseteils für den theoretisch gewünschten Fall ausgelegt, daß der Schnittpunkt der Flankenlinien der Kegelräder in axialer Richtung betrachtet in Einbaulage des Getriebes am nächsten am Getriebegrundgehäuse liegt. Dies kann beispielsweise der Situation eines Winkeltriebes von 90° entsprechen oder sogar einem Winkel größer 90°. Eine genaue Festlegung sollte im theoretisch möglichen Rahmen liegen, wobei auch die konstruktive Ausführbarkeit zu berücksichtigen ist. Vorzugsweise wird jedoch ein Gehäuse mit Eignung für Winkeltriebe im Bereich von 60° bis 90° angestrebt. Die Außenkontur des Getriebegehäuses für die unterschiedlichen Winkeltriebe mit im wesentlichen identischer Übersetzung i und gleichem Außendurchmesser d_{A} der einzelnen Kegelräder bleibt dabei konstant, während die Anpassung an die unterschiedlichen Winkeltriebe über die Mittel zur Lagerung des zweiten, den Abtrieb der Getriebebaueinheit bildenden Kegelrades erfolgt. Dies bietet des weiteren den Vorteil, daß auch die Anschlußelemente für den, den Winkeltrieb wenigstens teilweise umschließenden Gehäuseteil und den Gehäuseteil für die Grundgetriebebaueinheit für die gesamte Baureihe, unabhängig von der Größe des Winkels beibehalten werden können.

Es sind alle für Verzahnungsarten für Kegelradverzahnungen denkbar.

Unter einem weiteren Aspekt der Erfindung werden die ansonsten am Deckel des Grundgetriebes ohne Winkeltrieb angeflanschten Kühleinrichtungen am Endbereich des Winkeltriebes angeordnet. Die erforderlichen Verbindungsleitungen müssen dann nicht mehr über Schlauchleitungen hergestellt werden, sondern können als Kanäle ins Gehäuse eingreifen bzw. in diesen eingearbeitet werden.

Bei Ausführung des Winkeltriebes mit Einheitsgehäuse, d.h. mit im Innern austauschbar angeordneten Aufnahmeeinrichtungen für die Lagerung und Lagerung des zweiten Kegelrades lösbar auf der Getriebeausgangswelle, d.h. der den Ausgang des Winkeltriebes bildenden Welle, kann eine gegenüber konventionellen Ausführungen abweichende Ausbauweise des zweiten Kegelrades realisiert werden. Dabei wird der Getriebegehäuseteil, welcher den Winkeltrieb umschließt, zuerst von der Grundgetriebebaueinheit gelöst und gleichzeitig die drehfeste Verbindung zwischen dem zweiten Kegelrad und der Getriebeausgangswelle aufgehoben, so daß das zweite Kegelrad nach Herausführen der Getriebeausgangswelle aus dem Getriebegehäuse aus dem von dem Winkeltrieb umschließenden Getriebegehäuseteil gebildeten Innenraum herausgerollt wird. Dadurch wird es möglich, die gesamte Kegelradstufe in der Getriebebaueinheit in axialer Richtung betrachtet in Einbaulage weiter in das Innere des Getriebegehäuses, d.h. in Richtung der Getriebeeingangswelle zu versetzen, da auf einen Öffnungsbereich zum Herausführen des zweiten Kegelrades in Richtung der Symmetrieachse der Getriebeausgangswelle bzw. an der Gehäusewand mit Durchführung der Getriebeausgangswelle verzichtet werden kann. Der dort vorgesehene Durchgang am Getriebegehäuse muß lediglich ein Hindurchführen der Getriebeausgangswelle ermöglichen.

Die erfindungsgemäße Lösung ist für jegliche Ausführung einer Getriebebaueinheit geeignet. Dabei kann es sich beispielsweise um eine rein mechanische Getriebebaueinheit oder ein hydrodynamisch-mechanisches Verbundgetriebe handeln.

Die erfindungsgemäße Lösung wird anhand von Figuren erläutert. Darin ist im einzelnen folgendes dargestellt:
- Figur 1: verdeutlicht in schematisch vereinfachter Darstellung eine Ansicht in axialer Richtung auf eine erfindungsgemäß gestaltete Getriebebaueinheit;
- Figuren 2a und 2b: zeigen in schematisch vereinfachter Darstellung die Lagerung der Getriebeausgangswelle A für zwei unterschiedliche Winkel zwischen der Getriebeeingangswelle und der Getriebeausgangswelle;
- Figur 3: zeigt in vereinfachter Darstellung entsprechend einer Ansicht A auf die Figuren 1 oder 2 die Möglichkeit des Anbaus des Winkeltriebes;
- Figuren 4.1- 4.4: verdeutlichen Möglichkeiten des Einsatzes der erfindungsgemäßen Getriebebaueinheit in Busantrieben mit unterschiedlichen Anforderungen.

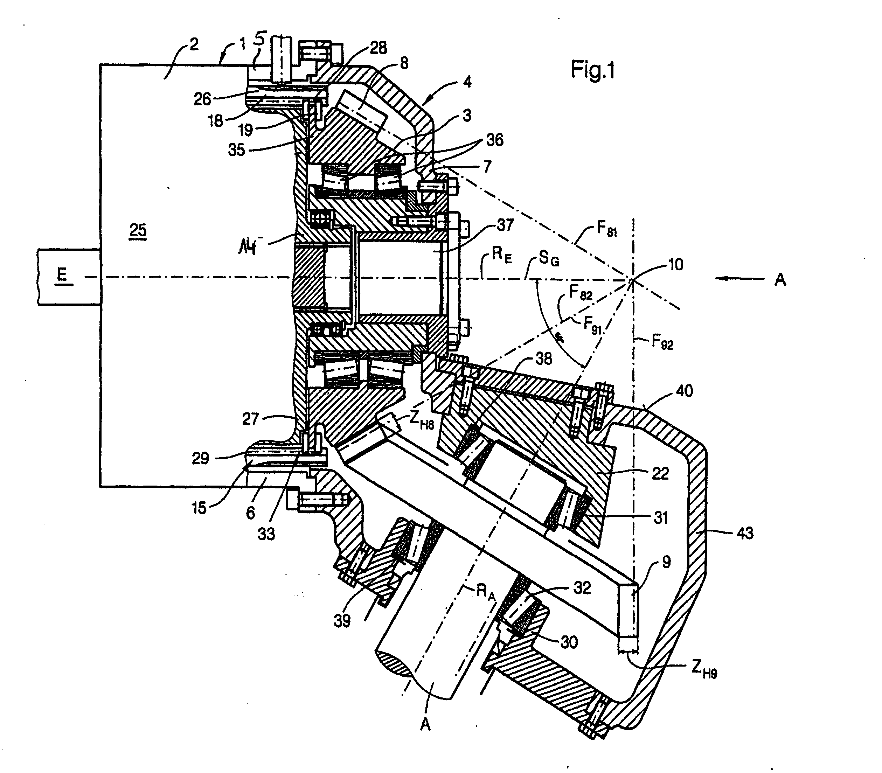

Die Fig. 1 verdeutlicht in schematisch vereinfachter Darstellung anhand eines Ausschnittes aus einem Axialschnitt einer Getriebebaueinheit 1 die erfindungsgemäß gestaltete Anbindung eines Winkeltriebes 4 an die Grundgetriebebaueinheit 25. Die Getriebebaueinheit weist eine Getriebeeingangswelle E und wenigstens eine, als Abtrieb fungierende Getriebeausgangswelle A auf. Getriebeeingangswelle E und Getriebeausgangswelle A sind derart angeordnet, daß deren theoretische Rotationsachsen R_{E} und R_{A} in einem Winkel zueinander verlaufen. Die Getriebebaueinheit 1 umfaßt wenigstens eine Grundgetriebebaueinheit 25, welche zwischen der Getriebeeingangswelle E und der Getriebeausgangswelle A angeordnet ist. Die Grundgetriebebaueinheit 25 umfaßt einen mechanischen Getriebeteil 2, und eine als Winkeltrieb 4 ausgebildete Kegelradstufe 3, welche mit der Getriebeausgangswelle A gekoppelt ist Die Getriebebaueinheit 1 weist des weiteren ein Getriebegehäuse 5 auf, welches wenigstens zweiteilig ausgeführt ist Im vorliegenden Fall umfaßt dieses wenigstens ein Getriebegrundgehäuse 6 und einen Getriebegehäuseteil 7, welcher den Winkeltrieb 4 wenigstens teilweise umschließt und mit dem Getriebegehäuse 5 verbindbar ist. Der Getriebegehäuseteil 7 kann jedoch ebenfalls mehrteilig ausgeführt sein.

Der Winkeltrieb 4, welcher von einer Kegetradstufe 3 gebildet wird, weist wenigstens zwei miteinander kämmende Kegelräder - ein erstes Kegelrad 8 und ein zweites Kegelrad 9 - auf. Das erste Kegelrad 8 ist dabei koaxial zur Getriebeeingangswelle E angeordnet. Das zweite Kegelrad 9, welches mit der Getriebeausgangswelle A drehfest koppelbar ist, ist in einem bestimmten Winkel zum ersten Kegelrad 8 angeordnet

Die theoretischen Rotationsachsen der einzelnen Kegelräder bzw. deren Symmetrieachsen, welche den theoretischen Rotationsachsen von Getriebeeingangs- und Getriebeausgangswelle R_{E} und R_{A} entsprechen, schneiden sich dabei in einem Punkt 10, welcher auf der Symmetrieachse der Getriebebaueinheit 1 liegt. In diesem Punkt schneiden sich auch die Flankenlinien F an die Verzahnung der einzelnen Kegelräder bei Projezierung in eine gemeinsame Ebene E mit der Getriebesymmetrieachse S_{G}. Die Flankenlinien sind hier mit F₈₁, F₈₂ und F₉₁, F₉₂ bezeichnet. Die Verzahnung der einzelnen Kegelräder ist vorzugsweise als Geradverzahnung ausgeführt. Denkbar sind jedoch auch Ausführungen mit Schrägverzahnung oder bogenförmig ausgebildeter Verzahnung, deren Flankenlinien bogenförmig verlaufen. Bei Kegelrädern mit bogenförmigen Flankenlinien können diese als Kreisbogen, Evolvente oder Epizykloide ausgeführt sein. Im dargestellten Fall sind die Kegelräder 8 und 9 mit einer konstanten Zahnhöhe Z_{H8} und Z_{H9} versehen. Die nachfolgenden Ausführungen beziehen sich auf die in der Fig. 1 konkret beschriebene Geradverzahnung. In Analogie können diese Ausführungen auch auf andere Verzahnungen angewandt werden.

Für eine bestimmte Getriebegrundbaueinheit 25 werden zur Realisierung unterschiedlicher Winkel zwischen der Getriebeeingangswelle E und der Getriebeausgangswelle A Winkeltriebe 4 vorgesehen, welche derart ausgelegt sind, daß die einzelnen Flankenlinien bei Geradverzahnung oder die in eine Ebene mit der Getriebeachse S_{G} projezierten Flankenlinien unterschiedliche Winkel mit der Getriebeachse S_{G} bilden können. Die einzelnen theoretisch für ein Gehäuseteil 7 geeigneten Wnkeitriebe 4 zur Realisierung unterschiedlicher Winkel zwischen der Getriebeeingangswelle E und der Getriebeausgangswelle A, die sich zum einen durch eine im wesentlichen konstante Übersetzung zwischen den einzelnen Kegelrädern 8 bzw. 9 auszeichnen sowie im wesentlichen konstante Außendurchmesser der einzelnen Kegelräder 8 bzw. 9 aufweisen, überstreichen hinsichtlich der Schnittpunkte ihrer Flankenlinien F₈₁, F₈₂, F₉₁, F₉₂ mit der Getriebeachse S_{G} einen bestimmten Bereich in axialer Richtung auf der Getriebeachse S_{G}. Entsprechend dieses Bereiches findet auch die Auslegung des Getriebegehäuses 5 bzw. des den Winkeltrieb umschließenden Getriebegehäuseteils 7 statt. Um vorzugsweise ein möglichst einheitliches Gehäuse 5, eingeschlossen den Getriebegehäuseteil 7, für eine Grundgetriebebaueinheit 1 mit unterschiedlichen Abtriebsgegebenheiten, d.h. unterschiedlichem Winkel der Getriebeausgangswelle A gegenüber der Getriebeeingangswelle E zu realisieren, wird der zweite Getriebegehäuseteil 7 derart standardisiert ausgeführt, daß dieser zur Aufnahme aller theoretisch möglichen bzw. gewünschten Winkeltriebe 4 geeignet ist, wobei als Unterscheidungskriterium lediglich der Winkel zwischen Getriebeeingangswelle E und Getriebeausgangswelle A fungiert, während das Übersetzungsverhältnis und die Außendurchmesser der Kegelräder für die einzelnen theoretisch möglichen Winkel konstant gehalten werden. Das Grundgehäuse des Getriebegehäuseteils 7 wird daher für die beiden theoretischen Grenzfälle ausgelegt, daß der Schnittpunkt 10 der Flankenlinien der Kegelräder 8 bzw. 9 der Kegelradstufe 3 in axialer Richtung am nächsten am Getriebegehäuse 5 bzw. am Getriebegehäuseteil 7 und am weitesten weg liegt. Der erste Grenzfall kann beispielsweise der Situation eines Winkeltriebes 4 von 90° entsprechen oder aber sogar einem Winkel größer 90°. Eine genaue Festlegung ist nicht erforderlich, sollte jedoch im theoretisch möglichen Rahmen liegen, wobei auch die konstruktive Ausführbarkeit mit zu berücksichtigen ist. Vorzugsweise wird jedoch ein Winkeltrieb mit einem Winkel zwischen Getriebeeingangswelle E und Getriebeausgangswelle A im Bereich von 90° bis < 180, wobei der Winkel < 180° den zweiten Grenzfall bildet, angestrebt. Wie bereits ausgeführt, bleibt die Außenkontur für unterschiedliche Winkeltriebe 4 mit im wesentlichen identischer Übersetzung i und gleichem Außendurchmesser d_{A} der einzelnen Kegelräder 8 bzw. 9 konstant, während die Anpassung an unterschiedliche Winkeltriebe, insbesondere die Anordnung der Lagerungen durch Gestaltung oder Bearbeitung der Innenkontur des Gehäuses, insbesondere des Getriebegehäuseteils 7, erfolgt.

Die erfindungsgemäße enge Koppelung des ersten Kegelrades 8 mit den Elementen des mechanischen Getriebeteils 2 kann auf unterschiedliche Art und Weise erfolgen. In der dargestellten bevorzugten Ausführung wurde eine Anbindung gewählt, welche sich durch eine besonders kompakte Bauform für die Gesamtgetriebebaueinheit 1 auszeichnet, da das erste Kegelrad 8 mit einem sehr großen Kegelraddurchmesser ausgeführt werden kann. Die Anbindung erfolgt hierbei an ein Getriebeelement eines Planetenradsatzes 27 der Grundgetriebebaueinheit 25 welches gleichzeitig den Abtrieb 15 für die Grundgetriebebaueinheit 25 und damit den Eingang für den Winkeltrieb 4 bildet. Der Planetenradsatz umfaßt dabei ein Sonnenrad, ein Hohlrad 26, Planetenräder und einen Steg 14. Das den Abtrieb 15 bildende Getriebeelement wird vom Hohlrad 26 des Planetenradsatzes 27 gebildet. Die Kopplung erfolgt durch Realisierung einer drehfesten Verbindung mittels Form- und Kraftschluß. Die drehfeste Verbindung ist hier mit 33 bezeichnet. Diese wird durch das Ineinandergreifen zueinander komplementär ausgeführter Mitnahmeelemente 18 und 19 am Hohlrad 26 und dem ersten Kegelrad 8 realisiert. Dafür wird das Kegelrad 8 mit einer entsprechenden Außenverzahnung 28 ausgeführt, die mit einer dazu komplementären Innenverzahnung 29 am Hohlrad 26 in Eingriff bringbar ist. Vorzugsweise wird dazu gleich die ohnehin am Hohlrad 26 vorgesehene Innenverzahnung 29 genutzt. Das Hohlrad ist zu diesem Zweck lediglich in axialer Richtung in Einbaulage in der Getriebebaueinheit 1 betrachtet verlängert ausgeführt, so daß neben den Planetenrädem 34 des Planetenradsatzes 27 das Hohlrad mit der Außenverzahnung 28 des Kegelrades 8 kämmt. Das Kegelrad 8 weist zu diesem Zweck in einem zweiten Teilbereich 35, welcher frei von der Kegelverzahnung ist, eine entsprechend ausgeführte Außenverzahnung 28 auf.

Dem Winkeltrieb 4 ist des weiteren der Gehäuseteil 7 zugeordnet, welcher den Winkeltrieb 4 umschließt und der in Einbaulage in Verbindung mit dem Fetriebegrundgehäuse 6 eine bauliche Einheit bildet. Zur Realisierung einer vormontierbaren Baueinheit weist der Winkeltrieb 4 entsprechende Lageranordnungen 36 und zur Abstützung eine Achse 37, welche ortsfest in dem Gehäuseteil 7 angeordnet ist, auf. Der Getriebegehäuseteil 7 kann einteilig, jedoch auch wie in der Figur 1 dargestellt mehrteilig ausgeführt sein. Die mehrteilige Ausführung wird dabei zur Vereinfachung der Montage bevorzugt.

Die Ausführung des Winkeltriebes 4 als modulare Baueinheit bietet den Vorteil, daß diese als Gesamtheit auf einfache Art und Weise in die Getriebebaueinheit 1 integrierbar ist. Dies erfolgt durch Ineinanderschieben und damit Ineingriffbringen der Außenverzahnung 28 und der Innenverzahnung 29 des Hohlrades. Die Sicherung gegen Verschiebung in axialer Richtung erfolgt durch die Anbindung des ersten Kegelrades 8 am Gehäuseteil 7 und der zur Realisierung der Getriebebaueinheit 1 erforderlichen Verbindung zwischen dem Getriebegehäuseteil 7 und dem Getriebegrundgehäuse 6 der Grundgetriebebaueinheit 25. Zusätzliche Sicherungselemente sind nicht erforderlich.

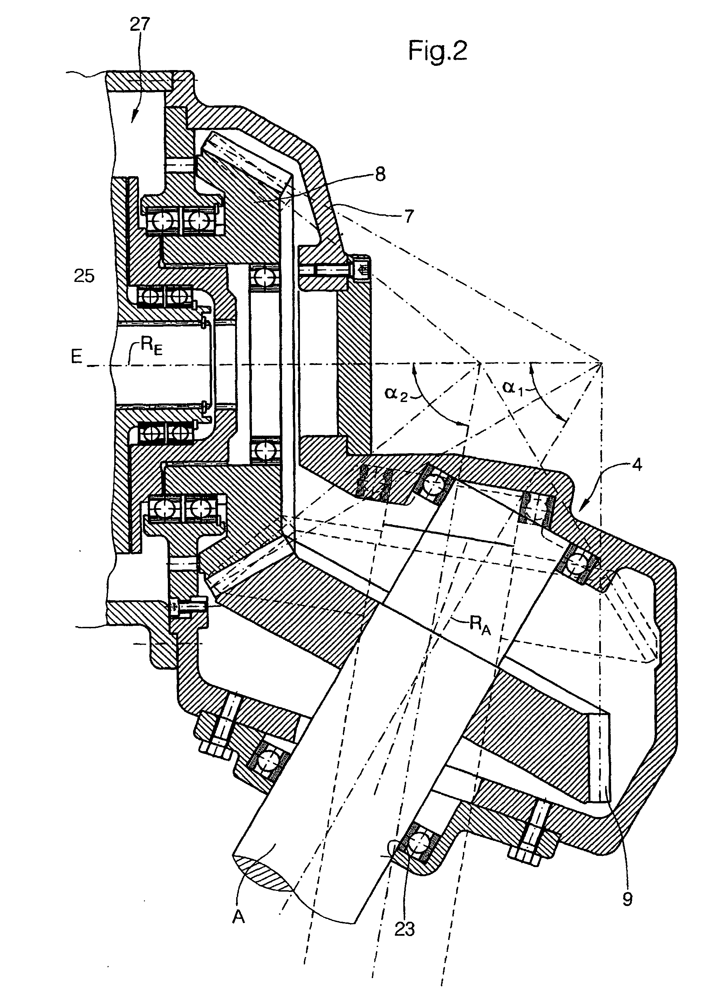

Die Figuren 2a und 2b verdeutlichen in schematisch vereinfachter Darstellung die Lagerung der Getriebeausgangswelle A für zwei unterschiedliche Winkel zwischen der Getriebeeingangswelle E und der Getriebeausgangswelle A. Die mit I bezeichnete Variante entspricht dabei einem Winkel α₁ zwischen Getriebeeingangswelle E und Getriebeausgangswelle A von 60°, während die mit II bezeichnete Variante die Lagerung bezeichnet, welche für eine Anordnung der Getriebeausgangswelle A zur Getriebeeingangswelle E einem Winkel α₂ von 80° entspricht.

Der Getriebegehäuseteil 7 weist des weiteren eine Durchgangsöffnung 23 auf, welche den Ausgang der Getriebeausgangswelle A ermöglicht. Vorzugsweise ist für alle Getriebegehäuseteile7 ein konstanter theoretischer Öffnungsbereich 23 vorgesehen. Die maximale Größe entspricht dabei dem von der Getriebeausgangswelle A theoretisch überstreichbarem Winkelbereich α.

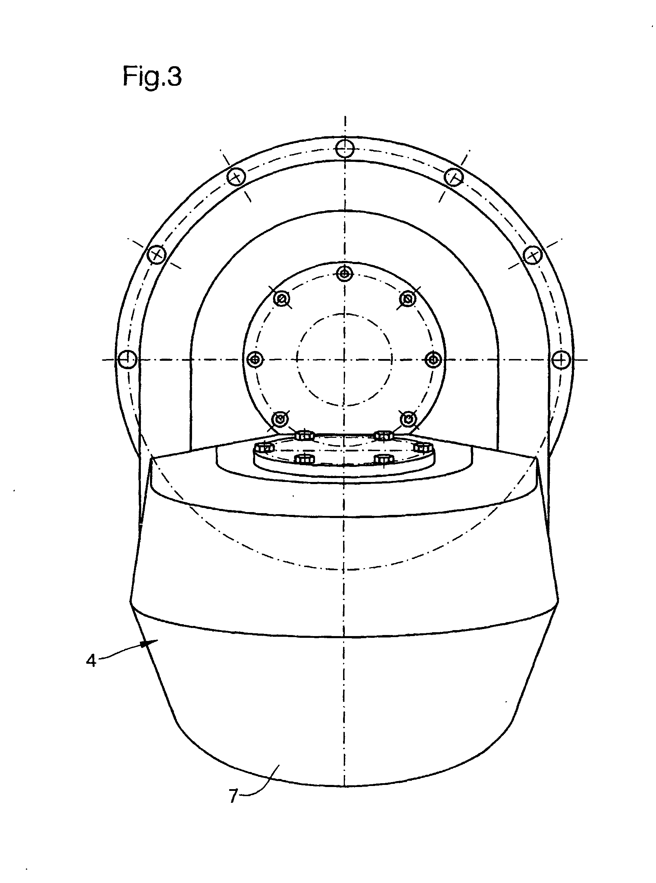

Der Getriebegehäuseteil 7 ist kraft- und/oder formschlüssig mit dem Getriebegrundgehäuse 6 verbindbar. Vorzugsweise erfolgt die Koppelung über Schraub- und/oder Steckverbindungen. Die zur Realisierung der Verbindung erforderlichen Ausnehmungen und Durchgangsöffnungen am Getriebegrundgehäuse 6 und am Getriebegehäuseteil 7 sind vorzugsweise derart ausgeführt, daß eine Drehbarkeit in Umfangsrichtung der Getriebebaueinheit 1 betrachtet möglich ist, um somit unterschiedliche Anordnungen der Kegelradstufe 3, insbesondere des zweiten Kegelrades 9 und damit des Winkeitriebes 4 bezogen auf die Einbaulage der Getriebebaueinheit und damit des Getriebegehäuses 5 gegenüber letzterem zu realisieren. Mögliche Stellungen sind als Beispiel in den Figuren 3 für eine Ansicht A entsprechend Fig. 1 oder 2 dargestellt. Diese Möglichkeit ist besonders dann von enormer Bedeutung, wenn das Getriebegehäuse 5 einen bestimmten Aufbau aufweist, welcher an eine bestimmte Einbaulage gebunden ist. Dies ist immer dann der Fall, wenn beispielsweise Rinnen oder Führungskanäle für Schmiermittel oder ähnliches vorzusehen sind. Die in der Fig. 3 bezogen auf die Einbaulage dargestellten Abtriebsmöglichkeiten sind jeweils mit A', A" und A''' bezeichnet.

Die in den Figuren 1 und 2 beschriebene Ausführung des Getriebegehäuseteils 7 ermöglicht des weiteren eine von der konventionellen Art abweichende Ausbauweise des zweiten Kegelrades 9. Während bei konventionellen Ausführungen das zweite Kegelrad 9 in Richtung Symmetrieachse der Getriebeausgangswelle A ausgebaut wurde, besteht mit der erfindungsgemäßen Ausführung des Getriebegehäuseteils 7 die Möglichkeit, den Getriebegehäuseteil 7 zuerst vom übrigen Getriebegehäuse 5 zu lösen und nach Lösung der Getriebeausgangswelle A vom Kegelrad 9 dieses in seitlicher Richtung aus dem vom Getriebegehäuseteil 7 gebildeten Innenraum 11 heraus zu rollen. Dadurch wird es möglich, die gesamte Kegelradstufe 3 in axialer Richtung weiter in das Innere des Getriebegehäuses 5 zu versetzen, da der Getriebegehäuseteil 7 nicht mehr an die Größe des Bereiches der Durchgangsöffnung 23 der Getriebeausgangswelle A an eine Öffnung gebunden ist, die es auch erlaubt in dieser Richtung, das zweite Kegelrad 9 auszubauen.

Andere Möglichkeiten zur Realisierung des Ausbaus des zweiten Kegelrades 9 bedingen eine entsprechende Gestaltung der Öffnung 23. In einer altemativen, hier nicht dargestellte Ausführung für die Durchgangsöffnung der Getriebeausgangswelle A kann diese elliptisch ausgeführt werden. Die maximalste Abmessung entspricht dabei dem Außendurchmesser d_{A} des zweiten Kegelrades 9. Beim Ausbau wird auch hier zuerst die Verbindung zwischen Getriebeausgangswelle A und zweitem Kegelrad 9 gelöst und das zweite Kegelrad 9 durch Kippen der elliptischen Öffnung zugeführt.

Die Ausgestaltung des Getriebegehäuses 5 entsprechend der Figuren 1 bis 3, insbesondere des Getriebegehäuseteils 7, ermöglicht die Schaffung eines Einheitsgehäuses, mittels welchem verschiedene Winkeltriebe 4 abgedeckt werden können. Lediglich die Ausgestaltung bzw. Fertigung und Bearbeitung der Innenkontur im Bereich des zweiten Kegelrades, welches mit der Getriebeausgangswelle A gekoppelt ist, legt den Abtriebswinkel fest. Durch die Aufteilung des Gehäuses in ein Getriebegrundgehäuse 6 und einen sogenannten Getriebegehäuseteil 7 kann der Winkeltrieb 4 in axialer Richtung gegenüber konventionellen Ausführungen weiter in Richtung Getriebeeingangswelle verrückt werden. Die sehr kurze Bauweise erfolgt somit über die Ebene der Anflanschung des gesamten Winkeltriebes. Die beschriebene bevorzugte Ausbauweise führt zu einer freien Gestaltung der Abtriebsseite, welche in einer kurzen und materialsparenden Bauweise resultiert. Die Grundgetriebebaueinheit ist ohne Winkeltrieb 4 prüfbar.

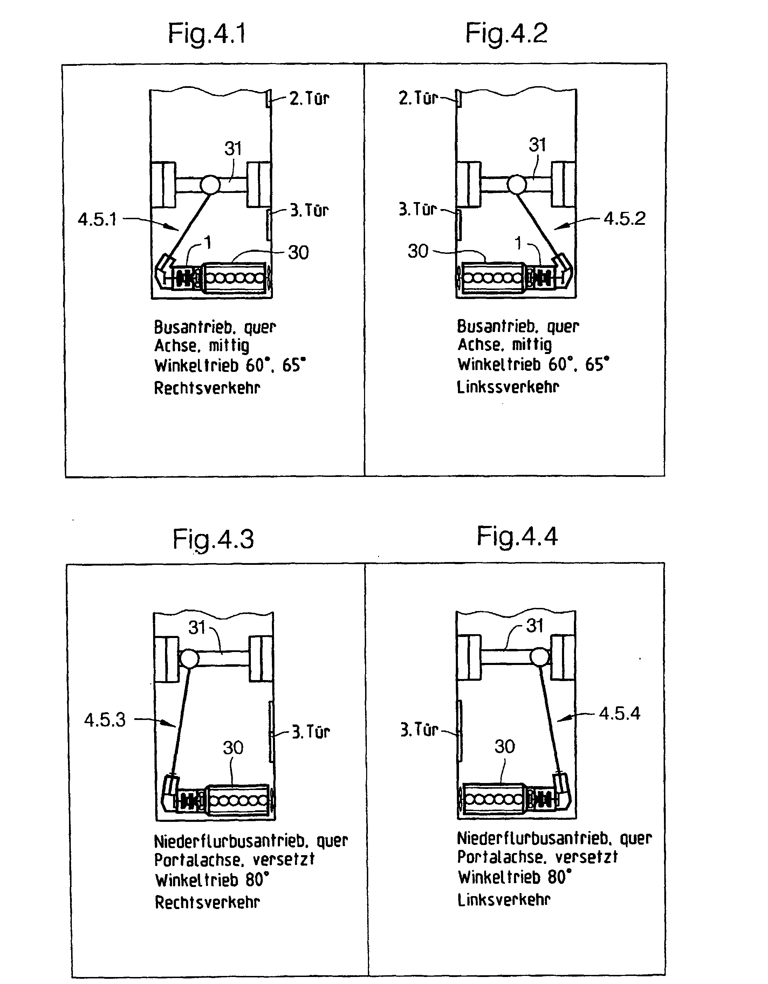

Die Fig. 4 verdeutlicht anhand von Beispielen mögliche Anwendungen einer erfindungsgemäß gestalteten Getriebebaueinheit 1 mit Einheitsgehäuse, umfassend das Getriebegrundgehäuse 6 und den Getriebegehäuseteil 7. Der Begriff Getriebegehäuseteil ist dabei nicht so zu verstehen, daß dieser einen vollständigen Abschluß ermöglicht, sondern dieser kann ebenfalls mit Öffnungen versehen werden, welche wiederum über deckelförmige Elemente verschließbar sind.

Die Fig. 4.1 verdeutlicht den Einsatz der erfindungsgemäßen Getriebebaueinheit 1 in einem Busantrieb mit quer eingebauter Antriebsmaschine 30 zum Antrieb einer Achse 31, welche zwischen zweiter und dritter Tür in einem Bus für den Busantrieb vorgesehen ist. Die Antriebsmaschine 30 ist mit der Getriebebaueinheit 1 zum Zwecke der Drehmomenten-/Drehzahlwandlung gekoppelt, wobei die Abtriebswelle 32 des mechanischen Getriebeteiles koaxial zur Getriebeeingangswelle E verläuft. Der Achsantrieb erfolgt hier über den Winkeltrieb 4.51 mittig auf die Achse 31. Der Winkeltrieb 4.51 nimmt dabei einen Winkel von 60 oder 65° ein. Diese Ausführung ist insbesondere für Rechtsverkehr geeignet.

Die Fig. 4.2 verdeutlicht eine Ausführung entsprechend Fig. 4.1 in schematisch vereinfachter Darstellung anhand einer Ansicht auf einen Busantrieb. Auch hier ist die Antriebsmaschine 30 quer eingebaut und der Achsantrieb erfolgt ebenfalls mittig. Die Ausführung unterscheidet sich gegenüber der in der Fig. 4.1 beschriebenen durch eine Änderung der Kraftflußrichtung zwischen Antriebsmaschine 30 und Getriebebaueinheit 1. Diese Ausführung ist insbesondere für Linksverkehr geeignet.

Die Figuren 4.3 und 4.4 verdeutlichen Einsatzbeispiele in sogenannten Niederflurbusantrieben, wobei die Anordnung der Antriebsmaschine 30 wiederum quer zur Fahrtrichtung erfolgt und der Antrieb der Portalachse 31 außermittig, d.h. versetzt, über einen Winkeltrieb 4.53 bzw. 4.54 erfolgt. Die Ausführung in der Fig. 4.3 ist dabei für Rechtsverkehr und die Ausführung in der Fig. 4.4 für Linksverkehr geeignet. Der Winkeltrieb, d.h. der Winkel zwischen Getriebeeingangswelle E und Getriebeausgangswelle A beträgt hier 80°.

### Bezugszeichenliste

- E: Getriebeeingangswelle
- A: Getriebeausgangswelle
- 1: Getriebebaueinheit
- 2: mechanischer Getriebeteil
- 3: Kegelradstufe
- 4: Winkeltrieb
- 5: Getriebegehäuse
- 6: Getriebegrundgehäuse
- 7: Getriebegehäuseteil
- 8: erstes Kegelrad
- 9: zweites Kegelrad
- 10: Schnittpunkt der Symmetrieachsen
- 11: Innenraum
- 14: Steg
- 15: Abtrieb des Grundgetriebes
- 16: Außenumfang des ersten Kegelrades
- 17: Innenumfang Hohlrad
- 18: Mitnahmeelemente
- 19: Mitnahmeelemente
- 23: Durchgangsöffnung
- 25: Grundgetriebebaueinheit
- 26: Hohlrad
- 27: Planetenradsatz
- 28: Außenverzahnung
- 29: Innenverzahnung
- 33: drehfeste Verbindung
- 34: Planetenräder
- 35: zweiter Teilbereich des Kegelrades
- 36: Lageranordnung
- 37: Achse

- F₈₁, F₈₂ und F₉₁, F₉₂ -: Flankenlinien der Verzahnungen der Kegelräder

## Patentansprüche

1. Getriebebaueinheit
1.1 mit einer Getriebeeingangswelle (E) und einer Getriebeausgangswelle (A) und einer, zwischen Getriebeeingangswelle (E) und Getriebeausgangswelle (A) angeordneten Grundgetriebebaueinheit (25), welche mit einem Winkeltrieb (4) gekoppelt ist;
1.2 der Winkeltrieb (4) umfaßt wenigstens eine Kegelradstufe (3) mit einem ersten Kegelrad (8) und einem zweiten Kegelrad (9), wobei das zweite Kegelrad (9) mit der Getriebeausgangswelle wenigstens mittelbar drehfest koppelbar ist;
1.3 mit einem Getriebegehäuse (5), umfassend wenigstens ein, die Grundgetriebebaueinheit (25) umschließendes Grundgetriebegehäuse (6), welches mit einem Gehäusedeckel in Form eines, den Winkeltrieb (4) wenigstens teilweise umschließenden Getriebegehäuseteiles (7) verbindbar ist;
**gekennzeichnet durch** die folgenden Merkmale:
1.4 das erste Kegelrad (8) des Winkeltriebes (4) und ein den Abtrieb (15) der Grundgetriebebaueinheit (25) bildendes Getriebeelement der Grundgetriebebaueinheit (25) sind unmittelbar miteinander drehfest verbunden und räumlich nahe beieinander angeordnet;
1.5 die Grundgetriebebaueinheit (25) ist frei von Betätigungselementen für die einzelnen Getriebeelemente zur Realisierung der Gangstufen, die Axialkräfte auf das Getriebegehäuseteil aufbringen;
1.6 die Realisierung der drehfesten Verbindung erfolgt **durch** Ausführung zueinander komplementärer Mitnahmeelemente, welche miteinander in Wirkverbindung bringbar sind, an den als Abtrieb (15) fungierenden Getriebeelementen und dem ersten Kegelrad (8);
1.7 das erste Kegelrad (8) des Winkeltriebes (4) ist im Getriebegehäuseteil (7) gelagert.

2. Getriebebaueinheit nach Anspruch 1, **gekennzeichnet durch** die folgenden Merkmale:
2.1 die Grundgetriebebaueinheit (25) umfaßt wenigstens einen Planetenradsatz (27) mit wenigstens einem Hohlrad (26), einem Sonnenrad, Planetenrädern und einem Steg (14) oder einen Stirnradsatz;
2.2 der Abtrieb (15) der Grundgetriebebaueinheit (25) wird von einem Element des Planetenradsatzes (27) oder des Stimradsatzes gebildet.

3. Getriebebaueinheit nach einem der Ansprüche 1 oder 2, **dadurch gekennzeichnet, daß** die Mitnahmeelemente am ersten Kegelrad (8) und/oder dem den Abtrieb (15) der Grundgetriebebaueinheit (25) bildenden Getriebeelement und der entsprechend dafür vorgesehenen komplementären Mitnahmelemente am den Abtrieb (15) der Grundgetriebebaueinheit (25) bildenden Getriebeelement und/oder ersten Kegelrad (8) in axialer Richtung bezogen auf den Verlauf der Getriebeachse, insbesondere der Getriebeeingangswelle (E) in Einbaulage betrachtet ausgebildet und ausgerichtet sind.

4. Getriebebaueinheit nach einem der Ansprüche 1 oder 2, **dadurch gekennzeichnet, daß** die Mitnahmeelemente am ersten Kegelrad (8) und/oder dem den Abtrieb (15) der Grundgetriebebaueinheit (25) bildenden Getriebeelement und der entsprechend dafür vorgesehenen komplementären Mitnahmelemente am den Abtrieb (15) der Grundgetriebebaueinheit (25) bildenden Getriebeelement und/oder ersten Kegelrad (8) in radialer Richtung bezogen auf den Verlauf der Getriebeachse, insbesondere der Getriebeeingangswelle (E) in Einbaulage betrachtet ausgebildet und ausgerichtet sind.

5. Getriebebaueinheit nach Anspruch 4, **gekennzeichnet durch** die folgenden Merkmale:
5.1 die Mitnahmeelemente sind im Bereich des Innenumfanges des den Abtrieb (15) bildenden Getriebeeiementes ausgebildet;
5.2 die dazu komplementären Mitnahmelemente am ersten Kegelrad (8) sind im Bereich dessen Außenumfanges (16) angeordnet.

6. Getriebebaueinheit nach einem der Ansprüche 4 bis 5, **gekennzeichnet durch** die folgenden Merkmale:
6.1 daß der Abtrieb (15) der Grundgetriebebaueinheit (25) vom Hohlrad (26) des Planetenradsatzes (27) gebildet wird;
6.2 die Mitnahmeelemente werden von einer zur Innenverzahnung (29) des Hohlrades (26) komplementären Außenverzahnung (28) am ersten Kegelrad (8) gebildet, wobei das Hohlrad (26) eine Verlängerung in axialer Richtung aufweist, welche frei vom Eingriff der Planetenräder ist und das erste Kegelrad (8) einen Teilbereich (35) aufweist, der frei von einer Kegelverzahnung ist.

7. Getriebebaueinheit nach einem der Ansprüche 2 bis 5, **dadurch gekennzeichnet, daß** der Abtrieb (15) der Grundgetriebebaueinheit von dem Sonnenrad oder dem Steg des Planetenradsatzes (27) oder einem Stirnrad des Stirnradsatzes gebildet wird.

8. Getriebebaueinheit nach einem der Ansprüche 1 bis 7, **gekennzeichnet durch** die folgenden Merkmale:
- der die Getriebebaueinheit wenigstens im Bereich des Winkeltriebes (4) umschließende Getriebegehäuseteil (7) ist derart ausgebildet, daß dieser für alle theoretisch möglichen Winkelabtriebe mit den folgenden Merkmalen:
- Übersetzung i ist nahezu konstant
- und Außendurchmesser der einzelnen Kegelräder nahezu identisch identische Außenabmessungen aufweist; wobei die unterschiedlichsten Lagerwinkel für die Getriebeausgangswelle (A) **durch** eine austauschbare Einrichtung zur Aufnahme der Lagerungen für das zweite Kegelrad (9) und/oder der Getriebeausgangswelle (A) realisiert werden.

9. Getriebebaueinheit nach Anspruch 8, **dadurch gekennzeichnet, daß** der Getriebegehäuseteil (7) als einteiliges Bauelement ausgeführt ist.

10. Getriebebaueinheit nach einem der Ansprüche 1 bis, 9, **dadurch gekennzeichnet, daß** die Grundgetriebebaueinheit (25) einen hydrodynamischen und einen mechanischen Getriebeteil umfaßt.

11. Getriebebaueinheit nach einem der Ansprüche 1 bis 10, **dadurch gekennzeichnet, daß** der Winkeltrieb (4) und der, diesen wenigstens teilweise umschließende Getriebegehäuseteil (7) zu einer modularen Einheit zusammenfaßbar sind.

12. Getriebebaueinheit nach einem der Ansprüche 1 bis 11, **dadurch gekennzeichnet, daß** die Verzahnung der miteinander kämmenden Kegelräder als Geradverzahnung ausgeführt ist.

13. Getriebebaueinheit nach einem der Ansprüche 1 bis 11, **dadurch gekennzeichnet, daß** die Verzahnung der miteinander kämmenden Kegelräder der Kegelradstufe als Schrägverzahnung ausgeführt ist.

14. Getriebebaueinheit nach einem der Ansprüche 12 oder 13, **dadurch gekennzeichnet, daß** die Kegelräder der Kegelradstufe Verzahnungselemente mit konstanter Zahnhöhe aufweisen.

## Claims

1. Transmission unit
1.1 comprising a transmission input shaft (E) and a transmission output shaft (A) and a basic transmission unit (25) arranged between transmission input shaft (E) and transmission output shaft (A) and coupled to a right-angle gear drive (4);
1.2 the right-angle gear drive (4) comprises at least one bevel gear step (3) comprising a first bevel gear (8) and a second bevel gear (9), wherein the second bevel gear (9) can be coupled at least indirectly non-rotatably to the transmission output shaft;
1.3 comprising a transmission housing (5), comprising at least one basic transmission housing (6), surrounding the basic transmission unit (25), which can be connected to a housing cover in the form of a transmission housing part (7) at least partially surrounding the right-angle gear drive (4);
**characterised by** the following features:
1.4 the first bevel gear (8) of the right-angle gear drive (4) and a transmission element of the basic transmission unit (25) forming the output (15) of the basic transmission unit (25) are directly non-rotatably connected to one another and are arranged spatially close together;
1.5 the basic transmission unit (25) is free of actuating elements for the individual transmission elements to achieve the gear progressions which apply axial forces to the transmission housing part;
1.6 the non-rotatable connection is achieved by providing mutually complementary entraining elements, which can be brought into interaction with one another, on the transmission elements functioning as output (15) and on the first bevel gear (8);
1.7 the first bevel gear (8) of the right-angle gear drive (4) is mounted in the transmission housing part (7).

2. Transmission unit according to claim 1, **characterised by** the following features:
2.1 the basic transmission unit (25) comprises at least one planetary gear set (27) with at least one ring gear (26), a sun wheel, planet gears and a web (14) or a spur gear set;
2.2 the output (15) of the basic transmission unit (25) is formed by an element of the planetary gear set (27) or the spur gear set.

3. Transmission unit according to either of claims 1 or 2, **characterised in that** the entraining elements on the first bevel gear (8) and/or the transmission element forming the output (15) of the basic transmission unit (25) and the complementary entraining elements accordingly provided for this purpose on the transmission element forming the drive (15) of the basic transmission unit (25) and/or first bevel gear (8) are constructed and oriented in the axial direction, with respect to the course of the transmission axis, in particular of the transmission input shaft (E), viewed in the fitted state.

4. Transmission unit according to either of claims 1 or 2, **characterised in that** the entraining elements on the first bevel gear (8) and/or the transmission element forming the output (15) of the basic transmission unit (25) and the complementary entraining elements accordingly provided for this purpose on the transmission elements forming the output (15) of the basic transmission unit (25) and/or first bevel gear (8) are constructed and oriented in the radial direction, with respect to the course of the transmission axis, in particular of the transmission input shaft (E), viewed in the fitted state.

5. Transmission unit according to claim 4, **characterised by** the following features:
5.1 the entraining elements are constructed in the region of the inner periphery of the transmission element forming the output (15) ;
5.2 the entraining elements complementary thereto on the first bevel gear (8) are arranged in the region of the outer periphery (16) thereof.

6. Transmission unit according to any of claims 4 to 5, **characterised by** the following features:
6.1 that the output (15) of the basic transmission unit (25) is formed by the ring gear (26) of the planetary gear set (27);
6.2 the entraining elements are formed by an outer toothing (28) complementary to the inner toothing (29) of the ring gear (26) on the first bevel gear (8), the ring gear (26) having an extension in the axial direction which is free from the engagement of the planetary gears, and the first bevel gear (8) having a section (35) which is free of a bevel toothing.

7. Transmission unit according to any of claims 2 to 5, **characterised in that** the output (15) of the basic transmission unit (25) is formed by the sun wheel or the web of the planetary gear set (27) or a spur gear of the spur gear set.

8. Transmission unit according to any of claims 1 to 7, **characterised by** the following features:
- the transmission housing part (7) surrounding the transmission unit at least in the region of the right-angle gear drive (4) is constructed in such a way that for all theoretically possible right-angle gear drives with the following features:
- gear ratio i is virtually constant
- and external diameter of the individual bevel gears is virtually identical,
the transmission housing part (7) has identical outer dimensions, the most varied bearing angles being achieved for the transmission output shaft (A) by a replaceable device for receiving the bearings for the second bevel gear (9) and/or the transmission output shaft (A).

9. Transmission unit according to claim 8, **characterised in that** the transmission housing part (7) is constructed as a one-part element.

10. Transmission unit according to any of claims 1 to 9, **characterised in that** the basic transmission unit (25) comprises a hydrodynamic and a mechanical transmission part.

11. Transmission unit according to any of claims 1 to 10, **characterised in that** the right-angle gear drive (4) and the transmission housing part (7) at least partially surrounding it can be combined into a modular unit.

12. Transmission unit according to any of claims 1 to 11, **characterised in that** the toothing of the meshing bevel gears is constructed as a spur toothing.

13. Transmission unit according to any of claims 1 to 11, **characterised in that** the toothing of the meshing bevel gears of the bevel gear step is constructed as a helical toothing.

14. Transmission unit according to either of claims 12 or 13, **characterised in that** the bevel gears of the bevel gear step have toothing elements with constant tooth depth.

## Revendications

1. Unité de transmission (boîte de vitesses)
1.1 avec un arbre d'entrée (E) et un arbre de sortie (A) et, agencée entre l'arbre d'entrée (E) et l'arbre de sortie (A), une unité de transmission de base (25) qui est couplée à un renvoi angulaire (4) ;
1.2 le renvoi angulaire (4) comprend au moins un étage de roues coniques (3) avec une première roue conique (8) et une deuxième roue conique (9), la deuxième roue conique (9) pouvant être couplée solidaire en rotation au moins indirectement avec l'arbre de sortie de la transmission ;
1.3 avec un carter de transmission (5) comprenant au moins un carter de transmission de base (6) entourant l'unité de transmission de base (25), lequel peut être relié à un couvercle de carter sous forme d'une partie de carter de transmission (7) entourant au moins partiellement le renvoi angulaire (4) ;
**caractérisée par** les dispositions suivantes :
1.4 la première roue conique (8) du renvoi angulaire (4) et un élément de transmission de l'unité de transmission de base (25) formant l'organe de sortie (15) de l'unité de transmission de base (25) sont directement reliés solidaires en rotation et agencés dans l'espace à proximité l'un de l'autre ;
1.5 l'unité de transmission de base (25) ne comporte pas d'éléments d'actionnement pour la réalisation des rapports de vitesses qui appliquent des forces axiales sur la partie de carter de transmission ;
1.6 la réalisation de la liaison solidaire en rotation est obtenue par la mise en oeuvre d'éléments d'entraînement complémentaires pouvant être placés en relation mutuellement active, entre les éléments de la transmission formant organe de sortie (15) et la première roue conique (8) ;
1.7 la première roue conique (8) du renvoi angulaire (4) est logée dans la partie de carter (7) de la transmission.

2. Unité de transmission selon la revendication 1, **caractérisée par** les dispositions suivantes :
2.1 l'unité de transmission de base (25) comprend au moins un jeu de roues planétaires (27) avec au moins une couronne de train planétaire (26), une roue solaire, des roues planétaires et un porte-satellite (14) ou un jeu de pignons droits ;
2.2 l'organe de sortie (15) de l'unité de transmission de base (25) est formé par un élément du jeu de roues planétaires (27) ou du jeu de pignons droits.

3. Unité de transmission selon l'une des revendications 1 et 2, **caractérisée en ce que** les éléments d'entraînement placés sur la première roue conique (8) et/ou sur l'élément formant l'organe de sortie (15) de l'unité de transmission de base (25) et les éléments d'entraînement complémentaires prévus à cet effet de manière correspondante sur l'élément de la transmission formant l'organe de sortie (15) de l'unité de transmission de base (25) et/ou sur la première roue conique (8), sont conçus et dirigés, vus en position de montage, dans la direction axiale par rapport à l'orientation de l'axe de la transmission, en particulier de l'arbre d'entrée (E).

4. Unité de transmission selon l'une des revendications 1 et 2, **caractérisée en ce que** les éléments d'entraînement placés sur la première roue conique (8) et/ou sur l'élément formant l'organe de sortie (15) de l'unité de transmission de base (25) et les éléments d'entraînement complémentaires prévus à cet effet de manière correspondante sur l'élément de la transmission formant l'organe de sortie (15) de l'unité de transmission de base (25) et/ou sur la première roue conique (8), sont conçus et dirigés, vus en position de montage, en direction radiale par rapport à l'orientation de l'axe de la transmission, en particulier de l'arbre d'entrée (E).

5. Unité de transmission selon la revendication 4,
**caractérisée par** les dispositions suivantes :
5.1 les éléments d'entraînement sont formés dans la zone du périmètre intérieur de l'élément de transmission formant l'organe de sortie (15) ;
5.2 les éléments d'entraînement complémentaires précédents sont agencés sur la première roue conique (8) dans la zone de son périmètre extérieur (16).

6. Unité de transmission selon l'une des revendications 4 et 5, **caractérisée par** les dispositions suivantes :
6.1 l'organe de sortie (15) de l'unité de transmission de base (25) est formé par la couronne de train planétaire (26) du jeu de roues planétaires (27) ;
6.2 les éléments d'entraînement sont formés par une denture extérieure (28) complémentaire de la denture intérieure (29) de la couronne de train planétaire (26) sur la première roue conique (8), la couronne de train planétaire (26) présentant un prolongement dans la direction axiale, lequel n'est pas en prise avec les roues planétaires et la première roue conique (8) présente une zone partielle (35) dépourvue de denture conique.

7. Unité de transmission selon l'une des revendications 2 à 5, **caractérisée en ce que** l'organe de sortie (15) de l'unité de transmission de base (25) est formé par la roue solaire ou le porte-satellite du jeu de roues planétaires (27) ou par un pignon droit du jeu de pignons droits.

8. Unité de transmission selon l'une des revendications 1 à 7, **caractérisée par** les dispositions suivantes :
la partie de carter (7) de la transmission entourant l'unité de transmission, au moins dans la zone du renvoi angulaire (4), est conçue de sorte que, pour tous les renvois angulaires théoriquement possibles ayant les mêmes particularités :
- démultiplication i quasiment constante et
- diamètre extérieur des différentes roues coniques quasiment identique,
elle présente des dimensions extérieures identiques ; les angles de palier les plus divers pour l'arbre de sortie (A) de la transmission étant réalisés par un dispositif échangeable destiné à la réception des logements de paliers pour la deuxième roue conique (9) et/ou l'arbre de sortie (A).

9. Unité de transmission selon la revendication 8, **caractérisée en ce que** la partie de carter (7) de la transmission est réalisée sous la forme d'un élément en une seule partie.

10. Unité de transmission selon l'une des revendications 1 à 9, **caractérisée en ce que** l'unité de transmission de base (25) comprend une partie hydrodynamique et une partie mécanique.

11. Unité de transmission selon l'une des revendications 1 à 10, **caractérisée en ce que** le renvoi angulaire (4) et la partie de carter de transmission (7) qui entoure au moins partiellement ce dernier peuvent être assemblés en une unité modulaire.

12. Unité de transmission selon l'une des revendications 1 à 11, **caractérisée en ce que** la denture des rones coniques qui engrènent ensemble, est réalisée sous forme de denture droite.

13. Unité de transmission selon l'une des revendications 1 à 11, **caractérisée en ce que** la denture des roues coniques de l'étage de roues coniques qui engrènent ensemble est réalisée sous forme de denture hélicoïdale.

14. Unité de transmission selon l'une des revendications 12 ou 13, **caractérisée en ce que** les roues coniques de l'étage de roues coniques présentent des éléments de denture ayant une hauteur de dent constante.
